# FASCICULE DE BREVET EUROPEEN

(11) **EP 1 558 013 B1**
(45) Date de publication et mention de la délivrance du brevet: **15.10.2008**
(21) Numéro de dépôt: 04293094.1
(22) Date de dépôt: 22.12.2004
(51) Int. Cl.: H04N 7/18, H04M 11/02

(54) **Procédé et terminaux communicants pour l'émission et la réception à distance de signaux de visiophonie et/ou d'interphonie**
Verfahren und Terminals für die Emission und den Distanzempfang von Signalen eines Ton- und/oder Bildtelephonats
Process and terminals for the emission and the remote reception of signals of audio and/or video- telephony

(30) Priorité: 23.12.2003 FR 0315250
(43) Date de publication de la demande: 27.07.2005
(73) Titulaire: Societé Française du Radiotéléphone, 75008 Paris (FR)
(72) Inventeur: Faisy, Christian, 97400 Saint Denis de la Reunion (FR)
(74) Mandataire: Debay, Yves

(56) Documents cités:
- WO-A-03/096696
- LUO R ET AL: "Capacity assignment on asymmetric bluetooth link" IEEE, vol. 3, 16 mars 2003 (2003-03-16), pages 1470-1474, XP010639986
- ZHANG PEI ET AL: "Bluetooth - the fastest developing wireless technology" IEEE, vol. 2, 21 août 2000 (2000-08-21), pages 1657-1664, XP010526681

## Description

La présente invention se rapporte au domaine des télécommunications appliqué aux systèmes de visiophonie et d'interphonie. L'invention concerne plus particulièrement un procédé permettant à au moins un terminal mobile communicant d'un occupant se trouvant dans la zone d'influence d'un émetteur de signaux de visiophonie et/ou d'interphonie, auprès duquel il a été préalablement déclaré, de recevoir les informations audio et/ou vidéo correspondant aux signaux émis par le système de visiophonie activé par un visiteur.

Il est connu dans l'art antérieur des systèmes de visiophonie et/ou d'interphonie permettant à un occupant d'être mis en contact visuel et/ou auditif avec un visiteur ayant activé ces systèmes à l'aide d'un interrupteur, pour permettre à un occupant de l'identifier. Ces systèmes sont présents chez des particuliers ou des entreprises et sont constitués d'un dispositif annexe ou extérieur permettant au visiteur d'activer le système et de s'identifier vocalement ou visuellement grâce à l'envoi, via un réseau filaire ou radio, des informations visuelles et/ou sonores identifiant le visiteur vers un dispositif central ou intérieur, permettant à l'un au moins des occupants d'authentifier les(s) visiteur(s) et de lui(leur) ouvrir les accès nécessaires à son(leur) introduction dans les lieux. Ces systèmes de visiophonie et/ou d'interphonie ne permettent qu'une mobilité très réduite de l'occupant par rapport au dispositif intérieur. L'occupant est obligé de se déplacer jusqu'au dispositif intérieur, souvent unique dans les lieux, pour accéder aux informations visuelles et/ou auditives relatives au visiteur et d'authentifier celui-ci depuis ce dispositif intérieur sans pouvoir s'en éloigner.

Il est également connu de l'art antérieur, par la demande de brevet international WO03/096696, des systèmes de visiophonie et/ou d'interphonie comportant un téléphone mobile de maison équipé de moyens permettant de recevoir des signaux de visiophonie et/ou d'interphonie et de contrôler les fonctions du système de visiophonie et/ou d'interphonie. Ces systèmes présentent l'inconvénient de nécessiter la fabrication d'un téléphone mobile de maison spécifique au système de visiophonie et/ou d'interphonie. De plus, ces systèmes ne permettent pas à des utilisateurs munis d'un terminal mobile communicant non spécifique du visiophonie et/ou d'interphonie de paramétrer leurs droits d'accès aux fonctions du système de visiophonie et/ou d'interphonie, par exemple lors de leur première arrivée dans la zone d'influence du système de visiophonie et/ou d'interphonie.

La présente invention a pour but de supprimer les inconvénients de l'art antérieur en proposant un procédé permettant à au moins un occupant de recevoir, à distance, sur son terminal mobile communicant, les signaux vidéo et/ou audio émis par au moins un système de visiophonie ou d'interphonie, lors de l'activation de celui-ci par un visiteur.

Ce but est atteint par le fait que l'invention concerne un procédé d'émission et de réception à distance de signaux de visiophonie et/ou d'interphonie, caractérisé en ce qu'il est mis en oeuvre par au moins un terminal mobile communicant d'au moins un occupant et au moins un système communicant de visiophonie et/ou d'interphonie comportant au moins un dispositif parmi un dispositif intérieur, dit central, et au moins un dispositif extérieur, dit annexe, et qu'il utilise au moins un protocole de communication sans fil locale, établissant une liaison sans fil locale entre le terminal mobile communicant et le système de visiophonie et/ou d'interphonie, le procédé comportant les étapes suivantes:
- détection, par le système communicant de visiophonie et/ou d'interphonie, d'au moins un terminal mobile communicant d'au moins un occupant lorsqu'il rentre dans la zone d'influence de la liaison sans fil locale du système de visiophonie et/ou d'interphonie;
- déclaration du terminal mobile communicant de l' occupant auprès du système communicant de visiophonie et/ou d'interphonie pourvu de moyens de communication radiotéléphonique, puis établissement de règles de communication entre ledit système de visiophonie et/ou d'interphonie et au moins un terminal mobile, par la liaison sans fil locale et établissement d'une autorisation de prise de contrôle du système de visiophonie et/ou d'interphonie par le terminal mobile communicant ;
- prise de contrôle éventuelle du système communicant de visiophonie et/ou d'interphonie, par le terminal mobile communicant de l'occupant lorsqu'il est présent dans la zone d'influence de la liaison sans fil locale du système de visiophonie et/ou d'interphonie.

Selon une autre particularité, l'étape de déclaration d'au moins un terminal mobile d'au moins un occupant, auprès du système communicant de visiophonie et/ou d'interphonie pourvu de moyens de communication radiotéléphonique, est réalisée grâce à la détection du terminal mobile dans la zone d'influence de la liaison sans fil locale du système de visiophonie et/ou d'interphonie et s'accompagne d'une étape de chargement, dans le terminal mobile, d'une application nécessaire à l'échange des signaux radiotéléphoniques entre le terminal mobile et le système de visiophonie et/ou d'interphonie, pour l'accès à un contrôle du système de visiophonie et/ou d'interphonie tel qu'une éventuelle désactivation, dans ledit dispositif central, de moyens de saisie et d'affichage et/ou de moyens de contrôle d'ouverture des accès aux lieux protégés par ledit système, au profit d'un terminal mobile communicant d'au moins un occupant, qui devient le terminal principal de contrôle du système.

Selon une autre particularité, le procédé comporte les étapes suivantes:
- activation, par un visiteur, d'un dispositif annexe du système de visiophonie et/ou d'interphonie, à l'aide d'un interrupteur d'appel, qui active des moyens d'acquisition et d'échange de signaux vidéo et/ou audio et des moyens de communication du dispositif annexe ;
- transmission des signaux vidéo et/ou audio acquis par le dispositif annexe vers le dispositif central dudit système, qui, grâce à un module de compression/décompression et de codage/décodage de signaux et une application logicielle comprise dans des moyens de traitement, transforme les signaux reçus en signaux transférables sur la liaison sans fil locale dudit système ;
- envoi sur le terminal mobile communicant d'au moins un occupant préalablement déclaré comme prioritaire (terminal maître) par rapport à un ensemble de terminaux sous influence de la liaison sans fil locale du système de visiophonie et/ou d'interphonie, par le dispositif central dudit système, grâce à des moyens de communication par la liaison sans fil locale, d'un message d'alerte et des signaux vidéo et/ou audio acquis par le dispositif annexe ;
- réception et affichage du message d'alerte, des signaux vidéo et/ou audio et de choix d'opérations, sur le terminal mobile communicant d'au moins un occupant (terminal maître), grâce à des moyens d'affichage, des moyens de communication via ladite liaison sans fil locale et des moyens de traitement dudit terminal comprenant un module de compression/décompression et de codage/décodage de signaux et une application logicielle, les choix d'opérations consistant en un rejet du visiteur aboutissant à l'arrêt des transmissions via ladite liaison sans fil locale ou une acceptation du visiteur aboutissant à l'ouverture des accès nécessaires à l'introduction du visiteur dans les lieux ou encore une réponse au visiteur aboutissant à la mise en relation réciproque de l'occupant avec le visiteur, via le système de visiophonie et/ou d'interphonie ;
- éventuelle mise en relation réciproque audio et/ou vidéo d'au moins un occupant (terminal maître) avec le visiteur, via des canaux dédiés, grâce à des moyens de communication via la liaison sans fil locale entre le terminal mobile communicant d'au moins un occupant (terminal maître) et le système de visiophonie et/ou d'interphonie et affichage de choix d'actions, sur le terminal mobile de l'occupant (terminal maître), à sélectionner parmi le rejet ou l'acceptation du visiteur, aboutissant respectivement à l'arrêt des transmissions sur ledit réseau ou à l'envoi d'un commande d'ouverture des accès nécessaires à l'introduction du visiteur dans les lieux protégés par ledit système.

Selon une autre particularité, le protocole de communication utilisé pour la liaison sans fil locale correspond à la norme des réseaux sans fil locaux de type « Bluetooth » et les canaux dédiés à la transmission des signaux vidéo et audio correspondent, respectivement, aux canaux ACL (Asynchronous Connectionless Link) et SCO (Synchronous Connection Oriented link).

Selon une autre particularité, l'étape de déclaration des terminaux mobiles communicants des occupants est une étape de type « inquiry scan » des protocoles de la norme « Bluetooth », permettant au système de détecter, dans sa zone d'influence, des dispositifs munis de moyens de communication radiotéléphonique à portée réduite, par exemple inférieure à 100 mètres, par le protocole « Bluetooth » et d'établir avec ceux-ci un groupe de confiance défini par la création d'une clé de cryptage commune et de leur attribuer des adresses, des horloges et des clés d'identification pour permettre le dialogue du système avec ces dispositifs.

Selon une autre particularité, l'étape de déclaration des terminaux mobiles communicants des occupants est associée à une étape de déclaration du scénario de gestion des priorités d'affectation du terminal maître.

Selon une autre particularité, la détection des terminaux mobiles communicants des occupants par le système de visiophonie et/ou d'interphonie se fait selon la procédure de « page scan » des protocoles de la norme « Bluetooth », permettant aux terminaux mobiles communicants d'interroger les systèmes, munis de moyens de communication radiotéléphonique par le protocole « Bluetooth », dans la zone d'influence desquels il est entré, sur les services qu'ils proposent, cette procédure obligeant le système de visiophonie et/ou d'interphonie à sortir du mode de « veille » pour entrer en mode « actif » de régulation des transmissions en fonction des demandes et de définition des opérations possibles par les différents dispositifs, puis en mode économe « sniff » permettant d'économiser de l'énergie, en autorisant ledit système à communiquer, à une fréquence réduite, avec les terminaux mobiles communicants, tant que ceux-ci est dans sa zone d'influence et qu'il peuvent contrôler les opérations à réaliser selon les choix des occupants.

Selon une autre particularité, le protocole de communication utilisé correspond à la norme de réseau sans fil local de type « Wi-Fi ».

Selon une autre particularité, le protocole de communication utilisé correspond à la norme de réseau sans fil local de type « HyperLAN ».

Selon une autre particularité, le protocole de communication utilisé correspond à la norme de réseau sans fil local de type « HomeRF ».

L'invention a également pour objet de proposer un système de visiophonie et/ou d'interphonie et un terminal mobile communicant d'au moins un occupant, pour mettre en oeuvre le procédé et supprimer les inconvénients de l'art antérieur.

A cet effet, l'invention concerne d'une part des terminaux mobiles communicants d'au moins un occupant, pour la mise en oeuvre du procédé, comprenant des moyens de traitement, des moyens de communication et des moyens de saisie, d'affichage et d'échange de signaux audio, caractérisés en ce qu'ils comprennent des moyens de traitement permettant l'émission et la réception de signaux selon un protocole de communication sans fil locale établissant une liaison sans fil locale et comportant des moyens d'établissement d'au moins une autorisation de prise de contrôle, par lesdits terminaux mobiles communicants, d'au moins un système de visiophonie et/ou d'interphonie comportant des moyens de traitement permettant l'émission et la réception de signaux selon un protocole de communication sans fil locale et permettant la prise de son contrôle par au moins un terminal mobile communicant.

Selon une autre particularité, les terminaux mobiles communicants comportent un module de compression/décompression et de codage/décodage permettant la mise en forme des données à échanger selon le protocole de communication sans fil locale, établissant une liaison sans fil locale.

Selon une autre particularité, les terminaux mobiles communicants contiennent une application logicielle, téléchargée à partir du système de visiophonie et/ou d'interphonie lors de leur déclaration préalable auprès de celui-ci, stockée dans une mémoire de type RAM (Random Access Memory) ou sous forme d'application SIM ToolKit stockée dans une carte SIM (Subscriber Identity Module) du terminal mobile, exécutée par un logiciel dudit terminal et permettant l'interopérabilité du système de visiophonie et/ou d'interphonie avec le terminal mobile communicant.

Selon une autre particularité, les moyens de communication des terminaux mobiles communicants des occupants comportent une antenne permettant l'émission et la réception des informations transmises sur au moins un réseau de radiotéléphonie et adaptée notamment aux fréquences utilisées pour les communications radiotéléphoniques par des liaisons sans fil locales.

L'invention concerne d'autre part un système de visiophonie et/ou d'interphonie, pour la mise en oeuvre du procédé, composé d'au moins un dispositif parmi un dispositif intérieur, dit central, et au moins un dispositif extérieur, dit annexe, ledit système comprenant des moyens de traitement, des moyens de communication et des moyens de saisie et d'affichage et étant caractérisé en ce que les moyens de traitement permettent l'émission et la réception de signaux selon un protocole de communication sans fil locale, établissant une liaison sans fil locale et comportant des moyens d'établissement d'au moins une autorisation de prise de contrôle du système de visiophonie et/ou d'interphonie par au moins un terminal mobile communicant comportant des moyens de traitement permettant l'émission et la réception de signaux selon un protocole de communication sans fil locale établissant une liaison sans fil locale et permettant la prise de contrôle d'au moins un système de visiophonie et/ou d'interphonie.

Selon une autre particularité, les moyens de traitement comportent un module de compression/décompression et de codage/décodage permettant la mise en forme des données à échanger par ladite liaison sans fil locale.

Selon une autre particularité, les moyens de traitement exécutent une application logicielle, permettant l'interopérabilité du système de visiophonie et/ou d'interphonie avec le terminal mobile communicant.

Selon une autre particularité, les moyens de communication du système de visiophonie et/ou d'interphonie comportent une antenne permettant l'émission et la réception des informations transmises sur un réseau de radiotéléphonie et adaptée notamment aux fréquences utilisées pour les communications radiotéléphoniques par des liaisons sans fil locales.

D'autres particularités et avantages de la présente invention apparaîtront plus clairement à la lecture de la description ci-après, faite en référence aux dessins annexés, dans lesquels :

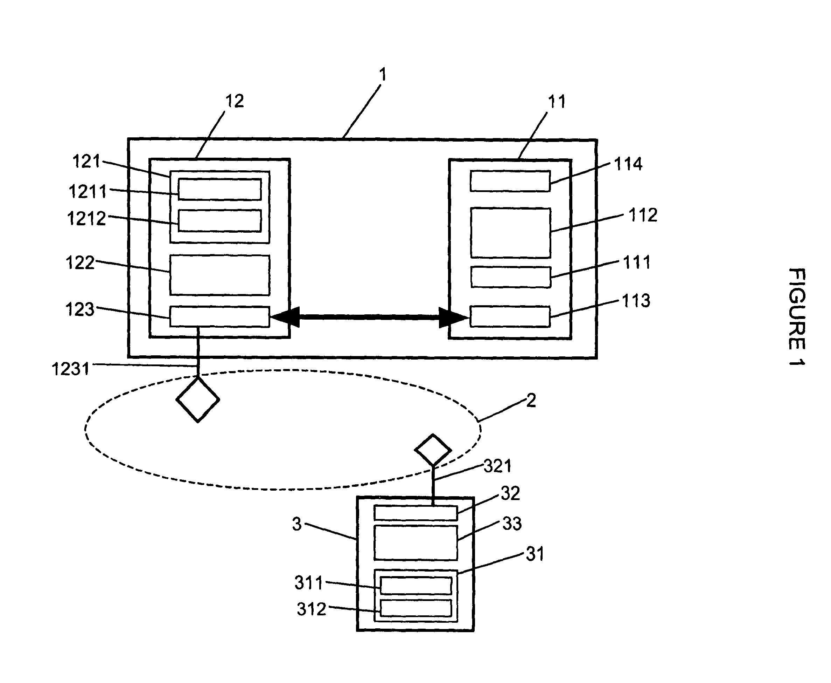

- La figure 1 représente un schéma du système de visiophonie, du terminal mobile communicant (seul le terminal maître est représenté) et du réseau sans fil local permettant la mise en oeuvre du procédé selon l'invention.

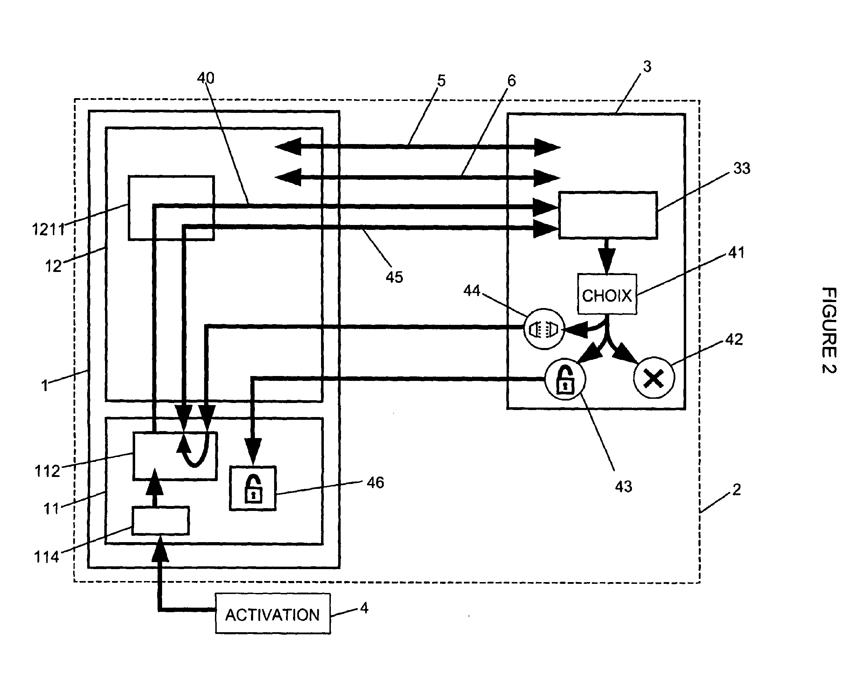

- La figure 2 représente un schéma des étapes du procédé selon l'invention.

La présente invention concerne un procédé permettant à au moins un occupant de recevoir, à distance, sur son terminal mobile communicant (terminal maître), les signaux vidéo et/ou audio émis par au moins un système de visiophonie ou d'interphonie, lors de l'activation de celui-ci par un visiteur. Le procédé selon l'invention est mis en oeuvre par un système de visiophonie et/ou d'interphonie protégeant l'accès d'un lieu et par un terminal mobile communicant d'au moins un occupant du lieu. Le terminal mobile communicant (3) de l'occupant comporte des moyens de traitement (31), des moyens (32) de communication et des moyens (33) de saisie, d'affichage et d'échange de signaux audio.

Dans un mode de réalisation préféré de l'invention, le terminal mobile communicant (3) de l'occupant est un téléphone portable qui est équipé de moyens (31) de traitement permettant l'émission et la réception de signaux selon un protocole de communication radiotéléphonique d'une norme de réseau sans fil local (2), grâce à des moyens (31) de traitement comprenant un module (311) de compression/décompression et de codage/décodage des signaux et à une application logicielle (312) exécutée par ledit terminal. A part ces moyens (31) de traitement mis en oeuvre dans le terminal mobile communicant (3) de l'occupant, aucun détail supplémentaire ne sera donné sur ce type de dispositif puisqu'il est connu de l'art antérieur. Le terminal mobile communicant de l'occupant peut également être un ordinateur portable, un assistant digital personnel (PDA, personal digital assistant) ou tout autre appareil de communication électronique apte à communiquer sur un réseau sans fil local. Le protocole de communication avantageusement utilisé pour la liaison sans fil locale peut ainsi correspondre par exemple aux normes de réseau sans fil local de type «bluetooth», de type «Wi-Fi», de type «HyperLAN» et de type «HomeRF». Le terminal mobile communicant est donc équipé de moyens de traitement permettant l'émission et la réception de signaux selon le protocole de communication radiotéléphonique de la norme de réseau sans fil local choisie. Ces protocoles permettent à un terminal mobile communicant d'être détecté lorsqu'il entre dans la zone d'influence d'un dispositif, par exemple d'un système de visiophonie et/ou d'interphonie selon l'invention, utilisant le même protocole. L'invention permet donc avantageusement qu'un terminal mobile communicant (3) soit détecté et puisse être déclaré par son utilisateur auprès du système (1) de visiophonie et/ou d'interphonie sans nécessiter de modification particulière du terminal mobile communicant (3). Suite à cette détection/déclaration, le chargement dans le terminal mobile (3) d'une application spécifique au contrôle du système (1) de visiophonie et/ou d'interphonie pourra lui permettre de complémenter les fonctions du terminal mobile (3) afin qu'il puisse accéder au contrôle des différentes fonctions offertes par les systèmes de visiophonie et/ou d'interphonie selon l'invention. Dans le mode de réalisation préféré, la liaison sans fil locale correspond à celle définie par la norme « Bluetooth », permettant l'émission et la réception de signaux vidéo et audio et les moyens (32) de communication du terminal mobile communicant de l'occupant sont adaptés à l'échange de données via ce type de réseau sans fil local (2). Le système (1) de visiophonie et/ou d'interphonie est composé, par exemple, d'un dispositif intérieur (12), dit central, et d'au moins un dispositif extérieur (11), dit annexe. Il comporte également des moyens (121) de traitement permettant l'émission et la réception de signaux selon un protocole de communication radiotéléphonique sans fil local (2), de type « Bluetooth » dans le mode de réalisation préféré. Le dispositif (11) annexe comporte des moyens (111) de traitement, des moyens (112) d'acquisition et d'échange de signaux vidéo et/ou audio, des moyens (113) de communication et un interrupteur (114) d'appel. Le dispositif (12) central comporte des moyens (121) de traitement, composés d'un module (1211) de compression/décompression et de codage/décodage des données, pour leur envoi sur un réseau sans fil local (2) et d'une application logicielle (1212) permettant l'interopérabilité du système de visiophonie et/ou d'interphonie avec des dispositifs, munis de moyens de communication via un réseau sans fil local, compatibles et présents dans la zone d'influence du réseau sans fil local (2) dudit système. Le dispositif central (12) comporte également des moyens (122) de saisie et d'affichage et des moyens (123) de communication, permettant d'une part l'échange de signaux, par exemple audio et/ou vidéo, avec le dispositif annexe (11), via par exemple un réseau filaire ou radio à hautes fréquences et d'autre part l'échange de signaux, par exemple audio et/ou vidéo, sur un réseau sans fil local (2), par exemple de type « Bluetooth ». Le dispositif central et les terminaux mobiles communicants (3) des occupants possèdent, dans leurs moyens de communication (123 et 32, respectivement), des antennes (1231 et 321, respectivement) adaptées à l'émission et la réception des informations transitant sur le réseau sans fil local (2). On notera que selon le type de réseau local, ils pourront être équipés d'un port infra rouge ou de tout autre dispositif nécessaire à la transmission de données sur ledit réseau. Le terminal (3) mobile communicant de l'occupant, permettant l'émission et la réception de signaux selon un protocole de communication radiotéléphonique d'une liaison sans fil locale (2), comporte également des moyens (31) de traitement, composés d'un module (311) de compression/décompression et de codage/décodage des données pour leur envoi sur un réseau sans fil local (2) et d'une application logicielle (312) permettant son interopérabilité avec le système de visiophonie et/ou d'interphonie.

Dans une variante de réalisation de l'invention, l'application logicielle (312) du terminal (3) est téléchargée à partir du système (1) de visiophonie et/ou d'interphonie, lors de la déclaration dudit terminal (3) auprès dudit système (1). La mise en oeuvre du procédé selon l'invention nécessite la déclaration (5) préalable du terminal mobile communicant (3) auprès du système (1) de visiophonie et/ou d'interphonie, afin que ledit terminal soit autorisé à contrôler les fonctions dudit système et l'affectation préalable de règles de gestion de priorité d'affectation du terminal maître en cas de pluralité de terminaux mobiles communicants des occupants. Le téléchargement de l'application logicielle (312), par exemple au cours de cette déclaration (5), permettra au terminal (3) de disposer des fonctions nécessaires au traitement des données qui lui sont envoyées par ledit système et au contrôle des opérations possibles dudit système de visiophonie et/ou d'interphonie. Cette application logicielle (312) peut, par exemple, être stockée dans une mémoire de travail de type RAM (Random Access Memory) du terminal (3). Elle peut également être stockée par exemple dans une mémoire physique comme une puce de type SIM (Subscriber Identity Module) proactive, permettant les fonctions « SIM Toolkit », selon lesquelles la puce contrôle les applications du terminal.

Dans le mode de réalisation préféré de l'invention, consistant en ce que le protocole de communication correspond à la norme « Bluetooth », l'étape de déclaration (5) des terminaux mobiles communicants (3) des occupants est une étape de type « inquiry scan » des protocoles de la norme « Bluetooth ». Cette étape permet au système (1) de détecter, dans la zone d'influence du réseau sans fil local (2) qui émet, les terminaux (3) des occupants et d'établir avec au moins un de ces terminaux un groupe de confiance, défini par la création d'une clé de cryptage commune. Les terminaux ainsi déclarés reçoivent des adresses, des horloges et des clés d'identification pour permettre leur dialogue avec le système (1) et autoriser leur contrôle des fonctions du système (1). Une autre étape succédant à la déclaration préalable d'au moins deux terminaux mobiles communicants (3), consiste à entrer à l'aide es moyens (33) de saisie les règles de gestion d'affectation du terminal maître en cas de pluralité de terminaux mobiles communicants. Par la suite, dès qu'un terminal déclaré entre dans la zone d'influence du réseau sans fil local (2) émis par le système (1), il est détecté par le système et autorisé à en contrôler les fonctions. Cette détection (6) du terminal mobile communicant (3) de l'occupant par le système (1) de visiophonie et/ou d'interphonie se fait, par exemple, selon la procédure de « page scan » des protocoles de la norme « Bluetooth ». Cette procédure permet aux terminaux mobiles communicants (3) de détecter les systèmes, munis de moyens de communication radiotéléphonique par le protocole « Bluetooth », dans la zone d'influence desquels il est entré. Ces systèmes les détectent également et la procédure permet aux terminaux (3) d'interroger le système (1) sur les services qu'il propose. Cette procédure oblige le système de visiophonie et/ou d'interphonie à sortir du mode de « veille » pour entrer en mode « actif » de régulation des transmissions en fonction des demandes, de façon à garder synchronisés avec lui les dispositifs présents dans sa zone d'influence et à définir les différentes opérations possibles. Après cette synchronisation et définition des fonctions, les dispositifs et le système entrent en mode économe « sniff » permettant d'économiser de l'énergie, en autorisant ledit système (1) à communiquer, à une fréquence réduite, avec l'un au moins des terminaux mobiles communicants (3), tant que ceux-ci sont dans sa zone d'influence. L'occupant dont le terminal mobile aura été identifié comme terminal maître peut alors contrôler, selon ses choix, les différentes opérations du système (1), depuis son terminal mobile communicant (3). Le terminal (3) de l'occupant peut devenir le terminal principal de contrôle du système grâce à une éventuelle désactivation, dans le dispositif central (12) du système (1), de moyens de saisie et d'affichage et/ou de moyens de contrôle d'ouverture des accès aux lieux protégés par ledit système, au profit du terminal mobile communicant de l'occupant (terminal maître unique).

En fonctionnement, lorsque la déclaration (5) et la détection (6) du terminal mobile communicant (3) de l'occupant ont été réalisées correctement, le système (1) de visiophonie et/ou d'interphonie selon l'invention permet le déport de ses fonctions sur au moins un terminal (3) d'un occupant. Lorsqu'un visiteur appuie sur l'interrupteur d'appel (114), présent sur le dispositif (11) dit annexe du système, situé à l'extérieur des lieux, il active le système (1). Cette activation (4) est transmise par le dispositif annexe (11), grâce à ses moyens (111) de traitement et ses moyens (113) de communication, vers le dispositif central (12) qui reçoit et traite cette activation grâce, respectivement à ses moyens (121) de traitement et ses moyens (123) de communication. La communication entre les dispositifs central et annexe est assurée par un système de liaison, utilisant, par exemple, soit un réseau filaire entre les dispositifs, soit des fréquences radio. L'activation (4) du dispositif annexe (11) aboutit à l'activation des moyens (112) d'acquisition vidéo et/ou audio du dispositif annexe (11), qui transmet les signaux vidéo et/ou audio acquis vers le dispositif central (12) du système (1). Le module (1211) de compression/décompression et de codage/décodage des signaux et l'application logicielle (1212) dudit dispositif central (12) permettent alors l'envoi (40) des signaux vidéo et/ou audio via le réseau sans fil local (2). En cas de présence d'au moins un terminal mobile communicant préalablement déclaré, un message d'alerte envoyé, en même temps que les signaux vidéo et/ou audio, sur le terminal (3) indique à l'occupant dont le terminal aura été reconnu comme unique ou maître, l'arrivée d'un visiteur, par une information « d'appel » affichée sur l'écran et une sonnerie spécifique (pré programmable ou définie). Les moyens (31) de traitement dudit terminal maître (3) permettent la lecture des signaux vidéo et/ou audio relatifs au visiteur, grâce au module (311) de compression/décompression et de codage/décodage des signaux et à l'application logicielle (312). Selon la norme « Bluetooth », chaque type de signal (audio et vidéo) est véhiculé sur un canal spécifiquement dédié. Par exemple, le canal ACL (Asynchronous Connectionless Link) véhicule les signaux vidéo compressés par l'émetteur et décompresseur par le récepteur. Le canal SCO (Synchronous Connection Oriented Link) véhicule les signaux audio. Les moyens (33) de saisie, d'affichage et d'échange de signaux audio du terminal (3) permettent à l'occupant de choisir l'opération à réaliser parmi les opérations proposées suite au message d'alerte et à la visualisation et/ou l'audition du visiteur. Cette étape de choix (41) consistera par exemple à choisir de rejeter (42) le visiteur ou de le laisser entrer (43) directement. Le choix de rejet (42) aboutira par exemple à l'arrêt des transmissions entre le système (1) et le terminal (3), sans autre avertissement pour le visiteur. Un choix d'acceptation (43) aboutira à l'ouverture (46) des accès nécessaires à l'introduction du visiteur dans les lieux protégés par le système (1). Cette étape de choix (41) peut également consister à répondre (44) vocalement au visiteur en sélectionnant, sur ledit terminal (3), une fonction spécifique dans le menu généré par l'application logicielle (312) téléchargée depuis le système (1) de visiophonie et/ou d'interphonie. Ce choix de réponse (44) au visiteur aboutit à l'ouverture de la connexion SCO pour permettre la mise en relation (45) « full duplex » de l'occupant sur son terminal (3) avec le visiteur sur le dispositif annexe (11), c'est-à-dire l'audition réciproque simultanée des deux interlocuteurs. Si après négociation, l'occupant décide d'ouvrir (43) l'accès au visiteur, la sélection d'une fonction spécifique aboutira à l'ouverture (46) des accès aux lieux protégés par ledit système (1) et à l'introduction du visiteur dans les lieux.

On comprend que l'on a ainsi réalisé un procédé permettant à un occupant de recevoir, à distance, sur son terminal mobile communicant, les signaux vidéo et/ou audio émis par au moins un système de visiophonie ou d'interphonie, lors de l'activation de celui-ci par un visiteur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'émission et de réception à distance de signaux de visiophonie et/ou d'interphonie, **caractérisé en ce qu'**il est mis en oeuvre par au moins un terminal mobile communicant (3) d'au moins un occupant et au moins un système (1) communicant de visiophonie et/ou d'interphonie comportant au moins un dispositif parmi un dispositif (12) intérieur, dit central, et au moins un dispositif (11) extérieur, dit annexe, et qu'il utilise au moins un protocole de communication sans fil locale, établissant une liaison sans fil locale (2) entre le terminal mobile communicant (3) et le système (1) de visiophonie et/ou d'interphonie, le procédé comportant les étapes suivantes:
- détection (6), par le système (1) communicant de visiophonie et/ou d'interphonie, d'au moins un terminal mobile communicant (3) d'au moins un occupant lorsqu'il rentre dans la zone d'influence de la liaison sans fil locale (2) du système (1) de visiophonie et/ou d'interphonie ;
- déclaration (5) du terminal mobile communicant (3) de l' occupant auprès du système (1) communicant de visiophonie et/ou d'interphonie pourvu de moyens (123) de communication radiotéléphonique, puis établissement de règles de communication entre ledit système (1) de visiophonie et/ou d'interphonie et le terminal mobile communicant (3), par la liaison sans fil locale (2) et établissement d'une autorisation de prise de contrôle du système (1) de visiophonie et/ou d'interphonie par le terminal mobile communicant (3) ;
- prise de contrôle éventuelle du système (1) communicant de visiophonie et/ou d'interphonie, par le terminal mobile communicant (3) de l'occupant lorsqu'il est présent dans la zone d'influence de la liaison sans fil locale (2) du système (1) de visiophonie et/ou d'interphonie.

2. Procédé selon la revendication 1, **caractérisé en ce que** l'étape (5) de déclaration d'au moins un terminal mobile (3) d'au moins un occupant, auprès du système (1) communicant de visiophonie et/ou d'interphonie pourvu de moyens (123) de communication radiotéléphonique, est réalisée grâce à la détection (6) du terminal mobile (3) dans la zone d'influence de la liaison sans fil locale (2) du système (1) de visiophonie et/ou d'interphonie et s'accompagne d'une étape de chargement, dans le terminal mobile (3), d'une application (312) nécessaire à l'échange des signaux radiotéléphoniques entre le terminal mobile (3) et le système (1) de visiophonie et/ou d'interphonie, pour l'accès à un contrôle du système (1) de visiophonie et/ou d'interphonie tel qu'une éventuelle désactivation, dans ledit dispositif central (12), de moyens (122) de saisie et d'affichage et/ou de moyens de contrôle d'ouverture des accès aux lieux protégés par ledit système, au profit du terminal mobile communicant (3) de l'occupant, qui devient le terminal principal de contrôle du système, dit « terminal maître unique ».

3. Procédé selon une des revendications 1 et 2, **caractérisé en ce qu'**il comporte les étapes suivantes:
- activation (4), par un visiteur, d'un dispositif (11) annexe du système (1) de visiophonie et/ou d'interphonie, à l'aide d'un interrupteur (114) d'appel, qui active des moyens (112) d'acquisition et d'échange de signaux vidéo et/ou audio et des moyens (113) de communication du dispositif (11) annexe ;
- transmission des signaux vidéo et/ou audio acquis par le dispositif (11) annexe vers le dispositif (12) central dudit système (1), qui, grâce à un module (1211) de compression/décompression et de codage/décodage de signaux et une application logicielle (1212) comprise dans des moyens (121) de traitement, transforme les signaux reçus en signaux transférables sur la liaison sans fil locale (2) dudit système (1) ;
- envoi (40) sur le terminal mobile communicant (3) de l'occupant préalablement déclaré comme prioritaire, dit terminal maître, par rapport à un ensemble de terminaux sous influence de la liaison sans fil locale (2), par le dispositif (12) central dudit système (1), grâce à des moyens (123) de communication par la liaison sans fil locale (2), d'un message d'alerte et des signaux vidéo et/ou audio acquis par le dispositif annexe (11) ;
- réception et affichage du message d'alerte, des signaux vidéo et/ou audio et de choix d'opérations, sur le terminal mobile communicant (3) d'au moins un occupant, dit terminal maître, grâce à des moyens (33) d'affichage, des moyens (32) de communication via ladite liaison sans fil locale (2) et des moyens (31) de traitement dudit terminal maître comprenant un module (311) de compression/décompression et de codage/décodage de signaux et une application logicielle (312), les choix d'opérations consistant en un rejet (42) du visiteur aboutissant à l'arrêt des transmissions via ladite liaison sans fil locale (2) ou une acceptation (43) du visiteur aboutissant à l'ouverture (46) des accès nécessaires à l'introduction du visiteur dans les lieux ou encore une réponse (44) au visiteur aboutissant à la mise en relation (45) réciproque de l'occupant avec le visiteur, via le système (1) de visiophonie et/ou d'interphonie ;
- éventuelle mise en relation (45) réciproque audio et/ou vidéo d'au moins un occupant avec le visiteur, via des canaux dédiés, grâce à des moyens (32) de communication via la liaison sans fil locale (2) entre le terminal mobile communicant (3) d'au moins un occupant, dit terminal maître, et le système (1) de visiophonie et/ou d'interphonie et affichage de choix d'actions, sur le terminal mobile (3) de l'occupant, à sélectionner parmi le rejet (42) ou l'acceptation (43) du visiteur, aboutissant respectivement à l'arrêt des transmissions sur ledit réseau ou à l'envoi d'un commande d'ouverture (46) des accès nécessaires à l'introduction du visiteur dans les lieux protégés par ledit système.

4. Procédé selon une des revendications 1 à 3, **caractérisé en ce que** le protocole de communication utilisé pour la liaison sans fil locale (2) correspond à la norme des réseaux sans fil locaux de type « Bluetooth » et les canaux dédiés à la transmission des signaux vidéo et audio correspondent, respectivement, aux canaux ACL, signifiant en anglais « Asynchronous Connectionless Link » et SCO, signifiant en anglais « Synchronous Connection Oriented link ».

5. Procédé selon une des revendications 1 à 4, **caractérisé en ce que** l'étape de déclaration (5) des terminaux mobiles communicants (3) des occupants est une étape de type « inquiry scan » des protocoles de la norme « Bluetooth », permettant au système (1) de détecter, dans sa zone d'influence, des dispositifs munis de moyens de communication radiotéléphonique à portée réduite, par exemple inférieure à 100 mètres, par le protocole « Bluetooth » et d'établir avec ceux-ci un groupe de confiance défini par la création d'une clé de cryptage commune et de leur attribuer des adresses, des horloges et des clés d'identification pour permettre le dialogue du système avec ces dispositifs.

6. Procédé selon une des revendications 1 à 5, **caractérisé en ce que** l'étape de déclaration (5) des terminaux mobiles communicants (3) des occupants est associée à une étape de déclaration, à l'aide de moyens (33) de saisie, des règles de gestion d'affectation du terminal maître en cas de pluralité de terminaux mobiles communicants.

7. Procédé selon une des revendications 1 à 6, **caractérisé en ce que** la détection (6) des terminaux mobiles communicants (3) des occupants par le système (1) de visiophonie et/ou d'interphonie se fait selon la procédure de « page scan » des protocoles de la norme « Bluetooth », permettant aux terminaux mobiles communicants (3) d'interroger les systèmes, munis de moyens de communication radiotéléphonique par le protocole « Bluetooth », dans la zone d'influence desquels il est entré, sur les services qu'ils proposent, cette procédure obligeant le système (1) de visiophonie et/ou d'interphonie à sortir du mode de « veille » pour entrer en mode « actif » de régulation des transmissions en fonction des demandes et de définition des opérations possibles par les différents dispositifs, puis en mode économe « sniff » permettant d'économiser de l'énergie, en autorisant ledit système (1) à communiquer, à une fréquence réduite, avec les terminaux mobiles communicants (3), tant que ceux-ci sont dans sa zone d'influence et qu'ils peuvent contrôler les opérations à réaliser selon les choix des occupants.

8. Procédé selon une des revendications 1 à 7, **caractérisé en ce que** le protocole de communication utilisé correspond à la norme de réseau sans fil local de type « Wi-Fi ».

9. Procédé selon une des revendications 1 à 7, **caractérisé en ce que** le protocole de communication utilisé correspond à la norme de réseau sans fil local de type « HyperLAN ».

10. Procédé selon une des revendications 1 à 7, **caractérisé en ce que** le protocole de communication utilisé correspond à la norme de réseau sans fil local de type « HomeRF ».

11. Terminaux mobiles communicants (3) d'au moins un occupant, pour la mise en oeuvre du procédé selon une des revendications 1 à 10, comprenant des moyens (31) de traitement, des moyens (32) de communication et des moyens (33) de saisie, d'affichage et d'échange de signaux audio, **caractérisés en ce qu'**ils comprennent des moyens (31) de traitement permettant l'émission et la réception de signaux selon un protocole de communication sans fil locale établissant une liaison sans fil locale (2) et comportant des moyens d'établissement d'au moins une autorisation de prise de contrôle, par lesdits terminaux mobiles communicants (3), d'au moins un système (1) de visiophonie et/ou d'interphonie comportant des moyens (121) de traitement permettant l'émission et la réception de signaux selon un protocole de communication sans fil locale et permettant la prise de son contrôle par au moins un terminal mobile communicant (3).

12. Terminaux mobiles communicants (3) selon la revendication 11, **caractérisés en ce qu'**ils comportent un module (311) de compression/décompression et de codage/décodage permettant la mise en forme des données à échanger selon le protocole de communication sans fil locale, établissant une liaison sans fil locale (2).

13. Terminaux mobiles communicants (3) selon une des revendications 11 et 12, **caractérisés en ce qu'**ils contiennent une application logicielle (312), téléchargée à partir du système (1) de visiophonie et/ou d'interphonie lors de sa déclaration (5) préalable auprès de ceux-ci, stockée dans une mémoire de type RAM, signifiant en anglais « Random Access Memory », ou sous forme d'application SIM ToolKit stockée dans une carte SIM, signifiant en anglais « Subscriber Identity Module », de l'un des terminaux mobiles (3), exécutée par un logiciel desdits terminaux (3) et permettant l'interopérabilité du système (1) de visiophonie et/ou d'interphonie avec au moins un terminal mobile communicant (3).

14. Terminaux mobiles communicants (3) selon une des revendications 11 à 13, **caractérisés en ce que** les moyens (32) de communication des terminaux communicants des occupants comportent une antenne (321) permettant l'émission et la réception des informations transmises sur au moins un réseau de radiotéléphonie et adaptée notamment aux fréquences utilisées pour les communications radiotéléphoniques par des liaisons sans fil locales (2).

15. Système (1) de visiophonie et/ou d'interphonie, pour la mise en oeuvre du procédé selon une des revendications 1 à 10, composé d'au moins un dispositif parmi un dispositif (12) intérieur, dit central, et au moins un dispositif (11) extérieur, dit annexe, ledit système (1) comprenant des moyens (121) de traitement, des moyens (123) de communication et des moyens (122) de saisie et d'affichage et étant **caractérisé en ce que** les moyens (121) de traitement permettent l'émission et la réception de signaux selon un protocole de communication sans fil locale, établissant une liaison sans fil locale (2) et comportant des moyens d'établissement d'au moins une autorisation de prise de contrôle du système (1) de visiophonie et/ou d'interphonie par au moins un terminal mobile communicant (3) comportant des moyens (31) de traitement permettant l'émission et la réception de signaux selon un protocole de communication sans fil locale établissant une liaison sans fil locale (2) et permettant la prise de contrôle d'au moins un système (1) de visiophonie et/ou d'interphonie.

16. Système de visiophonie et/ou d'interphonie selon la revendication 15, **caractérisé en ce que** les moyens (121) de traitement comportent un module (1211) de compression/décompression et de codagedécodage permettant la mise en forme des données à échanger par ladite liaison sans fil locale (2).

17. Système de visiophonie et/ou d'interphonie selon une des revendications 15 et 16, **caractérisé en ce que** les moyens (121) de traitement exécutent une application logicielle (1212), permettant l'interopérabilité du système (1) de visiophonie et/ou d'interphonie avec le terminaux mobiles communicants (3).

18. Système de visiophonie et/ou d'interphonie selon une des revendications 15 à 17, **caractérisé en ce que** les moyens (123) de communication du système (1) de visiophonie et/ou d'interphonie comportent une antenne (1231) permettant l'émission et la réception des informations transmises sur un réseau de radiotéléphonie et adaptée notamment aux fréquences utilisées pour les communications radiotéléphoniques par des liaisons sans fil locales (2).

## Claims

1. Method of remote transmission and reception of videophone and/or intercom signals, **characterised in that** it is implemented by at least one mobile communication terminal (3) of at least one occupier and at least one videophone and/or intercom communication system (1) comprising at least one device from amongst an internal, so-called central device (12) and at least one external, so-called peripheral device (11), and that it uses at least one local wireless communication protocol establishing vocal wireless connection (2) between the mobile communication terminal (3) and the videophone and/or intercom system (1), the method including the following steps:
- detection (6) by the videophone and/or intercom communication system (1) of at least one mobile communicating terminal (3) of at least one occupier when it enters the zone of influence of the local wireless connection (2) of the videophone and/or intercom system (1);
- notification (5) of the occupier's mobile communicating terminal (3) to the videophone and/or intercom communicating system (1) provided with radiotelephone communication means (123), then establishment of rules of communication between the said videophone and/or intercom system (1) and the mobile communication terminal (3) by the local wireless connection (2) and establishment of an authorisation to take control of the videophone and/or intercom system (1) by the mobile communication terminal (3);
- optional taking control of the videophone and/or intercom communication system (1) by the mobile communication terminal (3) of the occupier when it is present in the zone of influence of the local wireless connection (2) of the videophone and/or intercom system (1).

2. Method as claimed in Claim 1, **characterised in that** the step (5) of notification of the occupier's mobile communicating terminal (3) to the videophone and/or intercom communicating system (1) provided with radiotelephone communication means (123) is carried out by the detection (6) of the mobile terminal (3) in the zone of influence of the local wireless connection (2) of the videophone and/or intercom system (1) and is accompanied by a step of loading in the mobile terminal (3) of an application (312) necessary for the exchange of radiotelephone signals between the mobile terminal (3) and the videophone and/or intercom system (1) for access to a control of the videophone and/or intercom system (1) such as possible deactivation in the said central device (12) of capture and display means (122) and/or means for controlling opening of accesses to locations protected by the said system in favour of the occupier's mobile communication terminal (3), which becomes the principal control terminal of the system, the so-called "sole master terminal".

3. Method as claimed in any one of Claims 1 and 2, **characterised in that** it includes the following steps;
- activation (4) by a visitor of a peripheral device (11) of the videophone and/or intercom system (1) with the aid of a call switch (114) which activates means (112) for acquisition and exchange of video and/or audio signals and communication means (113) of the peripheral device (11);
- transmission of the video and/or audio signals acquired by the peripheral device (119) to the central device (12) of the said system (1) which, by means of a module (1211) for compression/decompression and for encoding/decoding signals and a software application (1212) included in processing means (121), transforms the received signals into signals which are transferable over the local wireless connection (2) of the said system (1);
- sending (40), via the occupier's mobile communication terminal (3) which has previously been notified as priority terminal, the so-called master terminal, relative to an assembly of terminals under the influence of the local wireless connection (2), by the central device (12) of the said system, via means (123) for communication by the local wireless connection (2), of an alert message and video and/or audio signals acquired by the peripheral device (11);
- reception and display of the alert message, the video and/or audio signals and the choice of operations, on the mobile communication terminal (3) of at least one occupier, the so-called master terminal, via display means (33), means (32) for communication via the said local wireless connection (2) and processing means (31) of the said master terminal comprising a module (311) for compression/decompression and encoding/decoding signals and a software application (312), the choice of operations consisting of a rejection (42) of the visitor leading to stoppage of the transmissions via the said local wireless connection (2) or an acceptance of the visitor leading to the opening (46) of the accesses necessary for the introduction of the visitor into the premises or also a response (44) to the visitor leading to the reciprocal communication (45) between the occupier and the visitor via the videophone and/or intercom system (1);
- optional reciprocal audio and/or video communication (45) between at least one occupier and the visitor via dedicated channels with the aid of means (32) for communication via the local wireless connection (2) between the mobile communication terminal (3) of at least one occupier, the so-called master terminal, and the videophone and/or intercom system (1) and display of the choice of actions on the occupier's mobile terminal (3) for selecting from amongst the rejection (42) or the acceptance (43) of the visitor, leading respectively to the stoppage of transmissions on the said network or to the transmission of a command (46) for opening the accesses necessary for the introduction of the visitor into the premises protected by the said system.

4. Method as claimed in any one of Claims 1 to 3, **characterised in that** the communication protocol used for the local wireless connection (2) corresponds to the "Bluetooth" standard for local wireless networks and the channels dedicated to the transmission of the video and audio signals correspond respectively to ACL (asynchronous connectionless link") channels and SCO ("synchronous connection oriented link") channels.

5. Method as claimed in any one of Claims 1 to 4, **characterised in that** the step of notification (5) of the mobile communication terminals (3) of the occupiers is a step of the "inquiry scan" type of the "Bluetooth" standard protocols, enabling the system (1) to detect in its zone of influence devices equipped with radiotelephone communication means with a short range, for example less than 100 metres, by the "Bluetooth" protocol and to establish with such devices a confidence group defined by the creation of a common encryption key and to attribute to them addresses, clock and identification keys in order to permit dialogue between the system and these devices.

6. Method as claimed in any one of Claims 1 to 5, **characterised in that** the step of notification (5) of the mobile communication terminals (3) of the occupiers is associated with a step of notification, with the aid of capture means (33), of the rules for management of the master terminal in the event of a plurality of mobile communication terminals.

7. Method as claimed in any one of Claims 1 to 6, **characterised in that** the detection (6) of the mobile communication terminals (3) of the occupiers by the videophone and/or intercom system (1) is carried out by the "page scan" procedure of the "Bluetooth" standard protocols, enabling the mobile communication terminals (3) to interrogate the systems equipped with means for radiotelephone communication by the "Bluetooth" protocol of which it has entered the zone of influence, concerning the services which they offer, this procedure obliging the videophone and/or intercom system (1) to leave the "standby" mode in order to enter the "active" mode for regulation of the transmissions as a function of requests and definition of the possible operations by the different devices, then in economic "sniff' mode making it possible to save power, by authorising the said system (1) to communicate at a reduced frequency with the mobile communication terminals (3) when these terminals are in its zone of influence and they can control the operations to be carried out according to the choices by the occupiers.

8. Method as claimed in any one of Claims 1 to 7, **characterised in that** the communication protocol used corresponds to the "WiFi" type of local wireless network standard.

9. Method as claimed in any one of Claims 1 to 7, **characterised in that** the communication protocol used corresponds to the "HyperLAN" type of local wireless network standard.

10. Method as claimed in any one of Claims 1 to 7, **characterised in that** the communication protocol used corresponds to the "HomeRF" type of local wireless network standard.

11. Mobile communication terminals (3) of at least one occupier for the implementation of the method as claimed in any one of Claims 1 to 10, comprising processing means (31), communication means (32) and means (33) for capture, display and exchange of audio signals, **characterised in that** they comprise processing means (31) enabling the transmission and reception of signals according to a local wireless communication profile establishing a local wireless connection (2) and including means for establishing at least one authorisation for taking control by the said mobile communication terminals (3) of at least one videophone and/or intercom system (1) including processing means (121) enabling the transmission and reception of signals according to a local communication protocol and enabling at least one mobile communication terminal (3) to take control.

12. Mobile communication terminals (3) as claimed in Claim 11, **characterised in that** they include a module (311) for compression/decompression and encoding/decoding enabling the shaping of the data to be exchanged according to the local wireless communication protocol, establishing a local wireless connection (2).

13. Mobile communication terminals (3) as claimed in any one of Claims 11 and 12, **characterised in that** they contain a software application (312) downloaded from the videophone and/or intercom system (1) during its prior notification (5) to the said terminals, stored in a memory of the RAM (random access memory) type, or in the form of a SIM ToolKit application stored in a SIM (subscriber identity module) card, of one of the mobile terminals (3), executed by software in the said terminals (3) and enabling the interoperability of the videophone and/or intercom system (1) with at least one mobile communication terminal (3).

14. Mobile communication terminals (3) as claimed in any one of Claims 11 to 13, **characterised in that** the communication means (32) of the communication terminals of the occupiers have an antenna (321) enabling the transmission and reception of the information transmitted over at least one radiotelephone network and adapted in particular to the frequencies used for radiotelephone communications by local wireless connections.

15. Videophone and/or intercom system (1) for implementing the method as claimed in any one of Claims 1 to 10, composed of at least one device from amongst an internal, so-called central device (12) and at least one external, so-called peripheral device (11), the said system (1) comprising processing means (121), communication means (123) and means (122) for capture and display, and being **characterised in that** the procession means (121) enable the transmission and reception of signals according to a local wireless communication protocol, establishing a local wireless connection (2) and including means for establishing at least one authorisation to take control of the videophone and/or intercom system (1) by at least one mobile communication terminal (3) including processing means (31) enabling the transmission and reception of signals according to a local wireless communication protocol establishing a local wireless connection (2) and enabling the taking of control of at least one videophone and/or intercom system (1).

16. Videophone and/or intercom system as claimed in Claim 15, **characterised in that** the processing means (121) include a module (1211) for compression/decompression and encoding/decoding enabling the shaping of the data to be exchanged by the said local wireless connection (2).

17. Videophone and/or intercom system as claimed in any one of Claims 15 and 16, **characterised in that** the processing means (121) execute a software application (1212) enabling the interoperability of the videophone and/or telecom system (1) with the mobile communication terminals (3).

18. Videophone and/or intercom system as claimed in any one of Claims 15 to 17, **characterised in that** the communication means (123) of the videophone and/or intercom system (1) include an antenna (1231) enabling the transmission and reception of the information transmitted over a radiotelephone network and adapted in particular to the frequencies used for the radiotelephone communications by local wireless connections (2).

## Patentansprüche

1. Verfahren zum Senden und Empfangen von Bildtelephonie- und/ oder Gegensprechsignalen aus der Ferne, **dadurch gekennzeichnet, dass** es von mindestens einem mobilen Fernmeldeendgerät (3) mindestens eines Bewohners und mindestens einem Fernmeldesystem (1) für Bildtelephonie und/oder Gegensprechen ausgeführt wird, das mindestens eine der folgenden Vorrichtungen, innere, sogenannte Zentralvorrichtung (12) und mindestens eine äußere, sogenannte Nebenvorrichtung (11), aufweist, und dass es mindestens ein lokales Funkkommunikationsprotokoll verwendet, das eine lokale Funkverbindung (2) zwischen dem mobilen Fernmeldeendgerät (3) und dem System (1) für Bildtelephonie und/oder Gegensprechen herstellt, wobei das Verfahren die folgenden Schritte umfasst:
- Feststellung (6) mindestens eines mobilen Fernmeldeendgerätes (3) mindestens eines Bewohners durch das System (1) für Bildtelephonie und/oder Gegensprechen, wenn er in Reichweite der lokalen Funkverbindung (2) des Systems (1) für Bildtelephonie und/oder Gegensprechen kommt;
- Anmeldung (5) des mobilen Fernmeldeendgerätes (3) des Bewohners beim System (1) für Bildtelephonie und/oder Gegensprechen, das mit Mitteln (123) für das Funkfernsprechen versehen ist, dann Aufstellen von Regeln für die Kommunikation zwischen dem genannten System (1) für Bildtelephonie und/oder Gegensprechen und dem mobilen Fernmeldeendgerät (3) über die lokale Funkverbindung (2) und Erstellen einer Genehmigung der Übernahme der Kontrolle des Systems (1) für Bildtelephonie und/ oder Gegensprechen durch das mobile Fernmeldeendgerät (3),
- eventuell Übernahme der Kontrolle des Systems (1) für Bildtelephonie und/oder Gegensprechen durch das mobile Fernmeldeendgerät (3) des Bewohners, wenn er sich in Reichweite der lokalen Funkverbindung (2) des Systems (1) für Bildtelephonie und/oder Gegensprechen befindet.

2. Verfahren nach Patentanspruch 1, **dadurch gekennzeichnet, dass** der Schritt (5) der Anmeldung des mindestens einen mobilen Fernmeldeendgerätes (3) mindestens eines Bewohners beim System (1) für Bildtelephonie und/oder Gegensprechen, das mit Mitteln (123) für das Funkfernsprechen versehen ist, dank der Feststellung (6) des mobilen Endgerätes (3) in Reichweite der lokalen Funkverbindung (2) des Systems (1) für Bildtelephonie und/oder Gegensprechen erfolgt und von einem Schritt des Ladens einer Anwendung (312) in das mobile Endgerät (3) begleitet wird, die für den Austausch der Funktelephonsignale zwischen dem mobilen Endgerät (3) und dem System (1) für Bildtelephonie und/oder Gegensprechen für den Zugriff auf eine Kontrolle des Systems (1) für Bildtelephonie und/oder Gegensprechen, wie etwa ein eventuelles Abschalten von Eingabe- und Anzeigemitteln (122) und/oder Mitteln zur Kontrolle der Öffnung der Zugänge zu den Räumlichkeiten, die durch das genannte System geschützt werden, in der genannten Zentralvorrichtung (12) zugunsten des mobilen Fernmeldeendgerätes (3) des Bewohners erforderlich ist, das das Hauptendgerät zur Kontrolle des Systems wird und "einziges Hauptendgerät" genannt wird.

3. Verfahren nach einem der Patentansprüche 1 und 2, **dadurch gekennzeichnet, dass** es die folgenden Schritte aufweist:
- Betätigung (4) einer Nebenvorrichtung (11) des Systems (1) für Bildtelephonie und/oder Gegensprechen durch einen Besucher mit Hilfe eines Rufschalters (114), der Mittel zur Aufnahme und zum Austausch von Video- und/oder Audiosignalen (112) und Kommunikationsmittel (113) der Nebenvorrichtung (11) aktiviert,
- Übertragung der von der Nebenvorrichtung (11) aufgenommenen Video- und/oder Audiosignale zur Zentralvorrichtung (12) des genannte Systems (1), die mit Hilfe eines Moduls (1211) zur Kompression/Dekompression und Codierung/Decodierung von Signalen und eines Anwendungsprogramms (1212), das in Verarbeitungsmitteln (121) enthalten ist, die empfangenen Signale in Signale umwandelt, die über die lokale Funkverbindung (2) des genannten Systems (1) übertragen werden können,
- Senden (40) einer Alarmmeldung und der von der Nebenvorrichtung (11) aufgenommenen Video- und/oder Audiosignale an das mobile Fernmeldeendgerät (3) des Bewohners, das vorab als vorranging gegenüber einer Gesamtheit von Endgeräten in Reichweite der lokalen Funkverbindung (2) erklärt wurde und Hauptendgerät genannt wird, durch die Zentralvorrichtung (12) des genannten Systems (1) mit Hilfe von Mitteln (123) zur Kommunikation über die lokale Funkverbindung (2),
- Empfang und Anzeige der Alarmmeldung, der Video- und/oder Audiosignale und von Signalen zur Auswahl von Aktionen auf dem mobilen Fernmeldeendgerät (3) mindestens eines Bewohners, Hauptendgerät genannt, mit Hilfe von Anzeigemitteln (33), Kommunikationsmitteln (32) über die genannte lokale Funkverbindung (2) und Verarbeitungsmitteln des genannten Hauptendgerätes, ein Modul (311) zur Kompression/Dekompression und Codierung/Decodierung von Signalen umfassend und ein Anwendungsprogramm (312), wobei die Auswahl an Aktionen aus einer Ablehnung (42) des Besuchers, der zum Abbruch der Übertragungen über die genannte lokale Funkverbindung (2) führt, oder einer Annahme (43) des Besuchers, die zur Öffnung (46) der Zugänge führt, die zum Einlassen des Besuchers in die Räumlichkeiten erforderlich ist, oder auch einer Antwort (44) an den Besucher, die dazu führt, den Bewohner mit dem Besucher über das System (1) für Bildtelephonie und/oder Gegensprechen miteinander in Verbindung zu bringen (45),
- eventuelle Herstellung einer wechselseitigen Audio- und/oder Videoverbindung zwischen mindestens einem Bewohner und dem Besucher über fest zugewiesene Kanäle mit Hilfe von Kommunikationsmitteln (32) über die lokale Funkverbindung (2) zwischen dem mobilen Fernmeldeendgerät (3) mindestens eines Bewohners, Hauptendgerät genannt, und dem System (1) für Bildtelephonie und/oder Gegensprechen und Anzeige einer Auswahl von Aktionen auf dem mobilen Endgerät (3) des Bewohners, auszuwählen unter der Ablehnung (42) oder der Annahme (43) des Besuchers, die zum Abbruch der Übertragungen auf dem genannten Netz führt bzw. zur Sendung eines Öffnungsbefehls (46) der Zugänge, die zur Einlassung des Besuchers in die Räumlichkeiten erforderlich sind, die vom genannten System geschützt werden.

4. Verfahren nach einem der Patentansprüche 1 bis 3, **dadurch gekennzeichnet, dass** das für die lokale Funkverbindung (2) verwendete Kommunikationsprotokoll der Norm für lokale Funknetze vom Typ "Bluetooth" entspricht und die der Übertragung der Video- und Audio-Signale dienenden Kanäle den Kanälen ACL, auf englisch "Asynchronous Connectionless Link", bzw. SCO, auf englisch "Synchronous Connection Oriented link", entsprechen.

5. Verfahren nach einem der Patentansprüche 1 bis 4, **dadurch gekennzeichnet, dass** der Anmeldungsschritt (5) der mobilen Fernmeldeendgeräte (3) der Bewohner ein Schritt vom Typ "inquiry scan" der Protokolle nach der "Bluetooth"-Norm ist, die dem System (1) erlaubt, in seiner Reichweite Vorrichtungen festzustellen, die mit Mitteln für das Funkfernsprechen auf geringe Entfernung, beispielsweise weniger als 100 Meter, nach dem Protokoll "Bluetooth" versehen sind, und mit diesen eine "Vertrauensgruppe" zu bilden, die durch die Schaffung eines gemeinsamen Verschlüsselungsschlüssels definiert ist, und ihnen Adressen, Taktsignale und Identifizierungsschlüssel zuzuweisen, um den Dialog des Systems mit diesen Vorrichtungen zu ermöglichen.

6. Verfahren nach einem der Patentansprüche 1 bis 5, **dadurch gekennzeichnet, dass** der Anmeldungsschritt (5) der mobilen Fernmeldeendgeräte (3) der Bewohner mit einem Schritt der Erklärung von Regeln zur Verwaltung der Zuweisung des Hauptendgeräts mit Hilfe von Eingabemitteln (33) verbunden ist, wenn es mehrere mobile Fernmeldeendgeräte gibt.

7. Verfahren nach einem der Patentansprüche 1 bis 6, **dadurch gekennzeichnet, dass** die Feststellung (6) der mobilen Fernmeldeendgeräte (3) der Bewohner durch das System (1) für Bildtelephonie und/oder Gegensprechen nach dem "page scan"-Verfahren der Protokolle der "Bluetooth"-Norm erfolgt, das den mobilen Fernmeldeendgeräten (3) erlaubt, die Systeme, die mit Funkfernsprechmitteln nach dem "Bluetooth"-Protokoll versehen sind, in deren Reichweite sie eingetreten sind, über die Dienstleistungen abzufragen, die sie anbieten, wobei dieses Verfahren das System (1) für Bildtelephonie und/oder Gegensprechen dazu zwingt, den Bereitschaftsmodus zu verlassen, um in den "aktiven" Betriebszustand der Regelung der Übertragungen in Abhängigkeit von den Anfragen und der Bestimmung der den verschiedenen Vorrichtungen möglichen Aktionen einzutreten, dann in den Sparmodus "sniff", der erlaubt, Energie einzusparen, indem er dem System (1) ermöglicht, mit verringerter Häufigkeit mit den mobilen Fernmeldeendgeräten (3) zu kommunizieren, solange diese sich in seiner Reichweite befinden und die Aktionen kontrollieren können, die nach der Auswahl der Bewohner auszuführen sind.

8. Verfahren nach einem der Patentansprüche 1 bis 7, **dadurch gekennzeichnet, dass** das verwendete Kommunikationsprotokoll der Norm für lokale Funknetze "Wi-Fi" entspricht.

9. Verfahren nach einem der Patentansprüche 1 bis 7, **dadurch gekennzeichnet, dass** das verwendete Kommunikationsprotokoll der Norm für lokale Funknetze "HyperLAN" entspricht.

10. Verfahren nach einem der Patentansprüche 1 bis 7, **dadurch gekennzeichnet, dass** das verwendete Kommunikationsprotokoll der Norm für lokale Funknetze "HomeRF" entspricht.

11. Mobile Fernmeldeendgeräte (3) mindestens eines Bewohners zur Ausführung des Verfahrens nach einem der Patentansprüche 1 bis 10, Verarbeitungsmittel (31) umfassend, Kommunikationsmittel (32) und Mittel (33) zur Eingabe, Anzeige und zum Austausch von Audiosignalen, **dadurch gekennzeichnet, dass** sie Verarbeitungsmittel (31) umfassen, die die Sendung und den Empfang von Signalen nach einem Protokoll für die lokale Funkkommunikation erlauben, die eine lokale Funkverbindung (2) herstellen und Mittel zur Erstellung mindestens einer Genehmigung zur Übernahme der Kontrolle mindestens eines Systems (1) für Bildtelephonie und/oder Gegensprechen durch die genannten mobilen Fernmeldeendgeräte (3) aufweisen, das Verarbeitungsmittel (121) aufweist, die die Sendung und den Empfang von Signalen nach einem Protokoll zur lokalen Funkkommunikation erlauben und die Übernahme der Kontrolle über es durch mindestens ein mobiles Fernmeldeendgerät (3).

12. Mobile Fernmeldeendgeräte (3) nach Patentanspruch 11, **dadurch gekennzeichnet, dass** sie ein Modul (311) zur Kompression/ Dekompression und zur Codierung/Decodierung aufweisen, das die Formatierung der auszutauschenden Daten nach dem Protokoll zur lokalen Funkkommunikation ermöglicht, die eine lokale Funkverbindung (2) herstellt.

13. Mobile Fernmeldeendgeräte (3) nach einem der Patentansprüche 11 und 12, **dadurch gekennzeichnet, dass** sie ein Anwendungsprogramm (312) enthalten, das bei ihrer vorhergehenden Anmeldung (5) beim System (1) für Bildtelephonie und/oder Gegensprechen von diesem heruntergeladen wird und das in einem Speicher vom Typ RAM, englisch "Random Access Memory", gespeichert wird oder in Form einer SIM-Toolkit-Anwendung, die in einer SIM-Karte, englisch "Subscriber Identity Module", eines der mobilen Fernmeldeendgeräte (3) gespeichert ist und von einem Programm der genannten mobilen Fernmeldeendgeräte (3) ausgeführt wird, und das die Interoperabilität des Systems (1) für Bildtelephonie und/oder Gegensprechen mit mindestens einem mobilen Fernmeldeendgerät (3) ermöglicht.

14. Mobile Fernmeldeendgeräte (3) nach einem der Patentansprüche 11 bis 13, **dadurch gekennzeichnet, dass** die Kommunikationsmittel (32) der mobilen Fernmeldeendgeräte der Bewohner eine Antenne (321)) umfassen, die die Sendung und den Empfang der Informationen erlaubt, die über mindestens ein Funkfernsprechnetz übertragen werden und insbesondere den Frequenzen angepasst ist, die für die Funkfernsprechverbindungen durch lokale Funkverbindungen (2) verwendet werden.

15. System (1) für Bildtelephonie und/oder Gegensprechen zur Ausführung des Verfahrens nach einem der Patentansprüche 1 bis 10, bestehend aus mindestens einer der folgenden Vorrichtungen, innere, sogenannte Zentralvorrichtung (12) und mindestens eine äußere, sogenannte Nebenvorrichtung (11), aufweist, wobei das genannte System (1) Verarbeitungsmittel (121) umfasst, Kommunikationsmittel (123) und Eingabe- und Anzeigemittel (122), **dadurch gekennzeichnet, dass** die Verarbeitungsmittel (121) die Sendung und den Empfang von Signalen nach einem Protokoll für lokale Funkverbindungen erlauben, eine lokale Funkverbindung (2) herstellen und Mittel zur Erstellung mindestens einer Genehmigung zur Übernahme der Kontrolle des System (1) für Bildtelephonie und/oder Gegensprechen durch mindestens ein mobiles Fernmeldeendgerät (3) umfasst, das Verarbeitungsmittel (31) aufweist, die die Sendung und den Empfang von Signalen nach einem Protokoll für lokale Funkverbindungen erlauben, eine lokale Funkverbindung (2) herstellen und die Übernahme der Kontrolle mindestens eines Systems (1) für Bildtelephonie und/oder Gegensprechen ermöglichen.

16. System für Bildtelephonie und/oder Gegensprechen nach Patentanspruch 15, **dadurch gekennzeichnet, dass** die Verarbeitungsmittel (121) ein Modul (1211) zur Kompression/Dekompression und zur Codierung/Decodierung aufweisen, das die Formatierung der über die genannte lokale Funkverbindung (2) auszutauschenden Daten erlaubt.

17. System für Bildtelephonie und/oder Gegensprechen nach einem der Patentansprüche 15 und 16, **dadurch gekennzeichnet, dass** die Verarbeitungsmittel (121) ein Anwendungsprogramm (1212) ausführen, das die Interoperabilität des Systems (1) für Bildtelephonie und/oder Gegensprechen mit dem mobilen Fernmeldeendgerät (3) ermöglicht.

18. System für Bildtelephonie und/oder Gegensprechen nach einem der Patentansprüche 15 bis 17, **dadurch gekennzeichnet, dass** die Kommunikationsmittel (123) des Systems (1) für Bildtelephonie und/oder Gegensprechen eine Antenne (1231) aufweisen, die die Sendung und den Empfang der Informationen erlaubt, die über ein Funkfernsprechnetz übertragen werden, und die insbesondere an die Frequenzen angepasst ist, die für die Funkfernsprechverbindungen durch lokale Funkverbindungen (2) verwendet werden.
